(19) Europäisches Patentamt
European Patent Office
Office européen des brevets

(11) **EP 3 292 383 B1**

(12) **EUROPEAN PATENT SPECIFICATION**

(45) Date of publication and mention
of the grant of the patent:
**28.07.2021 Bulletin 2021/30**

(51) Int Cl.:
**G01G 19/414** (2006.01)   **G07G 1/00** (2006.01)
**G06Q 20/18** (2012.01)   **G06Q 20/20** (2012.01)

(21) Application number: **16789384.1**

(86) International application number:
**PCT/IB2016/052522**

(22) Date of filing: **03.05.2016**

(87) International publication number:
**WO 2016/178146 (10.11.2016 Gazette 2016/45)**

(54) **RETAIL STORE CHECKOUT SYSTEM AND METHOD**

KASSENABFERTIGUNGSSYSTEM UND VERFAHREN FÜR DEN EINZELHANDEL

SYSTÈME ET PROCÉDÉ DE CAISSE DE COMMERCE DE DÉTAIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.05.2015 US 201562156292 P**

(43) Date of publication of application:
**14.03.2018 Bulletin 2018/11**

(73) Proprietor: **Supersmart Ltd.**
**4809249 Rosh HaAyin (IL)**

(72) Inventor: **CLEPER, Yair**
**4977418 Petach-Tikva (IL)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A2- 1 933 119**     **EP-A2- 1 933 267**
**WO-A1-2015/055989**   **WO-A2-2009/066161**
**US-A1- 2008 005 036**   **US-A1- 2008 141 755**
**US-A1- 2012 055 982**   **US-A1- 2013 103 539**
**US-A1- 2013 240 270**   **US-B1- 7 707 008**
**US-B1- 7 780 081**

**Description**

**TECHNICAL FIELD**

The following disclosure relates to retail store checkout systems and methods.

**BACKGROUND**

Shopping in a retail store involves the gathering of product items for purchase by a customer navigating about the store. The product items the customer intends to purchase are placed in a shopping receptacle such as a shopping cart or basket. After having gathered all the product items for purchase in the shopping receptacle, the customer proceeds to a point-of-sale or checkout terminal for starting a checkout process. At the checkout terminal, the customer takes the product items for purchase out from the shopping receptacle and places them on a counter for barcode-scanning by the cashier to determine the total amount due for payment. Barcode-scanned product items are bagged and then removed by the customer from the retail store once the payment process is completed.

Some retail stores may be partially or fully equipped with self-checkout terminals in which the product items are barcode scanned by the customer to facilitate the above described checkout process. The use of self-checkout terminals allow a retailer to increase the number of checkout terminals and, thereby, reduce the number of persons waiting in a waiting queue. However, self-checkout terminals may require the introduction of additional security measures to prevent scanning errors and theft.

Each of documents EP 1 933 119 A2, EP 1 933 267 A2 and US 2012/0055982 A1 discloses a retail checkout system in accordance with the features of the preamble of independent claim 1.

**SUMMARY**

The invention discloses a retail check out system according to claim 1 and a method according to claim 15. According to a an embodiment, the retail checkout system allows a plurality of customers to checkout one or more product items of at least one set of product items of a given type that has an estimated mean weight and a deviation from the estimated mean weight associated with the set of product items.

In Example 1, the system comprises a retail checkout weight scale; and a checkout engine that is operative to determine a mean anticipated cumulative weight and a distribution from the mean anticipated cumulative weight for at least one product item for which a customer initiated the acquisition of respective weight-information; determine a factual cumulative weight of a customer's shopping receptacle placed on the retail checkout weight scale of the retail checkout system; and to determine whether the factual cumulative weight meets a checkout criterion with respect to the distribution from the mean anticipated cumulative weight.

Example 2 includes the subject matter of Example 1 and, optionally, wherein the checkout engine is further operative to monitor the shopping behaviour of a customer and, based on the monitored shopping behaviour, associate a shopping pattern to the customer.

Example 3 includes the subject matter of examples 1 or 2 and, optionally, wherein the determining of a mean anticipated cumulative weight and a distribution from the anticipated cumulative weight for at least one product item for which a customer initiated the acquisition of respective weight-information, comprises: estimating, based on sample weights of product items of the same type, parameters of a Xi distribution function by employing Monte Carlo simulation, and based on the estimated parameters of the Xi distribution function, estimating parameters of a Normal Distribution of weights for a population of sets of product items.

Example 4 includes the subject matter of example 3 and, optionally, wherein the estimating of parameters of a Xi-distribution comprises estimating the sample variance of weights for a population of product items of the same type.

Example 5 includes the subject matter of examples 3 or 4 and, optionally, further comprises, based on the estimated parameters the Xi-distribution function, estimating the mean weight and standard deviation for the population of product items.

Example 6 includes the subject matter of any of examples 1 to 5 and, optionally, wherein the determining the mean anticipated cumulative weight further comprises, for product items for which no sampled weights are available: generating a system of linear equations, wherein each equation describes, per a customer that has checked out, a factual cumulative weight with the number of product items selected by a customer multiplied by a respective unknown weight of the selected product item, and solving the system of linear equations for the respective unknown weights, provided that such system is not underdetermined.

Example 7 includes the subject matter of example 6 and, optionally, wherein the solving of system of the linear equations comprises employing a least square fitting method.

Example 8 includes the subject matter of any of examples 1 to 7 and, optionally, wherein the checkout engine is operative to determine, based on the nominal weights assigned to the product items loaded into the shopping receptacle, the anticipated cumulative weight of a shopping receptacle.

Example 9 includes the subject matter of any of examples 1 to 8 and, optionally, wherein the step of determining the mean anticipated cumulative weight comprises applying a Maximum Likelihood Estimation to obtain an estimate of a mean weight for a set of product items of the same type.

Example 10 includes the subject matter of any of examples 1 to 9 and, optionally, wherein the checkout engine enables settling payment for product items selected and placed by the customer into the shopping receptacle, without requiring the removal of the product items from the shopping receptacle.

Example 11 includes a computer program product enabling a plurality of customers to checkout one or more product items of at least one set of product items of a given type that has an estimated mean weight and a deviation from the estimated mean weight associated with the set of product items, the computer program product comprising: a non-transitory tangible storage medium readable by a processing circuit and storing instructions for execution by the processing circuit for performing a method comprising: determining a mean anticipated cumulative weight and a distribution from the mean anticipated cumulative weight for at least one product item for which a customer initiated the acquisition of respective weight-information; determining a factual cumulative weight of a customer's shopping receptacle placed on the retail checkout weight scale of the retail checkout system; and determining whether the factual cumulative weight meets a checkout criterion with respect to the distribution from the mean anticipated cumulative weight.

Example 12 includes the subject matter of example 11 and, optionally, wherein the computer program product is further operative to monitor the shopping behaviour of a customer, and, based on the monitored shopping behaviour, associate a shopping pattern to the customer.

Example 13 includes the subject matter of examples 11 or 12 and, optionally, wherein the determining of a mean anticipated cumulative weight and a distribution from the mean anticipated cumulative weight for at least one product item for which a customer initiated the acquisition of respective weight-information, comprises estimating, based on sample weights of product items of the same type, parameters of Xi distribution function by employing Monte Carlo simulation, and based on the estimated parameters of the Xi distribution function, estimating parameters of a Normal Distribution of weights for a population of sets of product items.

Example 14 includes the subject matter of example 13 and, optionally, wherein the estimating of parameters of a Xi-distribution comprises estimating the sample variance of weights for a population of product items of the same type.

Example 15 includes the subject matter of example 14 and, optionally, further comprises, based on the estimated sample variance of weights of a population of product items, estimating the mean weight and standard deviation for the population of product items.

Example 16 includes a method for allowing a plurality of customers to checkout one or more product items of at least one set of product items of a given type that has an estimated mean weight and deviation from the estimated mean weight associated with the set of product items, comprising determining a mean anticipated cumulative weight and distribution from the mean anticipated cumulative weight for at least one product item for which a customer initiated the acquisition of respective weight-information; determining a factual cumulative weight of a customer's shopping receptacle placed on the retail checkout weight scale of the retail checkout system; and determining whether the factual cumulative weight meets a checkout criterion with respect to the distribution from the mean anticipated cumulative weight.

Example 17 includes the subject matter of example 16 and, optionally, further comprises monitoring the shopping behaviour of a customer, and based on the monitored shopping behaviour, associating a shopping pattern to the customer.

Example 18 includes the subject matter of examples 16 or 17 and, optionally, wherein the determining of a mean anticipated cumulative weight and a distribution from the mean anticipated cumulative weight for at least one product item for which a customer initiated the acquisition of respective weight-information, comprises estimating, based on sample weights of product items of the same type, parameters of a Xi distribution function by employing Monte Carlo simulation, and based on the estimated parameters of the Xi distribution function, estimating parameters of a Normal Distribution of weights for a population of sets of product items.

Example 19 includes the subject matter of example 18 and, optionally, wherein the estimating of parameters of a Xi-distribution comprises estimating the sample variance of weights for a population of product items of the same type.

Example 20 includes the subject matter of examples 18 or 19 and, optionally, further comprises, based on the estimated parameters the Xi-distribution function, estimating the mean weight and standard deviation for the population of product items.

Example 21 includes the subject matter of any of examples 16 to 20 and, optionally, wherein the step of determining the mean anticipated cumulative weight further comprises, for product items for which no sampled weights are available: generating a system of linear equations, wherein each equation describes, per a customer that has checked out, the factual cumulative weight with the number of product items selected by the customer multiplied by a respective unknown weight of the selected product item, and solving the system of linear equations for the respective unknown weights, provided that such system is not underdetermined.

Example 22 includes the subject matter of example 21 and, optionally, wherein the solving of system of the linear equations comprises employing a least square fitting method.

Example 23 includes the subject matter of any of examples 16 to 22 and, optionally, wherein the determining of the anticipated cumulative weight of a shopping receptacle is based on the nominal weights assigned to the product items loaded into the shopping receptacle.

Example 24 includes the subject matter of any of examples 16 to 23 and, optionally, wherein the determining the mean anticipated cumulative weight comprises applying a Maximum Likelihood Estimation to obtain an estimate of a mean weight for a set of product items of the same type.

Example 25 includes a computer program product directly loadable into the internal memory of a computer, comprising software code portions for performing the steps of any of examples 16 to 24 when the product is run on the computer.

Example 26 includes a non-transitory tangible computer readable storage medium storing a set of instructions that are executable by at least one processor of a server to cause the server to perform a method for allowing a plurality of customers to checkout one or more product items of at least one set of product items of a given type that has an estimated mean weight and a deviation from the estimated mean weight associated with the set of product items, the method comprising determining a mean anticipated cumulative weight and a distribution from the mean anticipated cumulative weight for at least one product item for which a customer initiated the acquisition of respective weight-information; determining a factual cumulative weight of a customer's shopping receptacle placed on a retail checkout weight scale of the retail checkout system; and determining whether the factual cumulative weight meets a checkout criterion with respect to the distribution from the mean anticipated cumulative weight.

Example 27 includes the subject matter of example 26 and, optionally, wherein the method further comprises monitoring the shopping behaviour of a customer, and based on the monitored shopping behaviour, associating a shopping pattern to the customer.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

## BRIEF DESCRIPTION OF THE DRAWINGS

The drawings and descriptions are meant to illuminate and clarify embodiments disclosed herein, and should not be considered limiting in any way.

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.

FIG. 1A is a schematic block-diagram illustration of a retail checkout system, according to some embodiments;

FIG. 1B is a schematic back perspective view of a checkout tunnel of a retail checkout terminal, according to some embodiments;

FIG. 1C is a schematic front perspective view of the checkout tunnel, according to the embodiment of FIG. 1B;

FIG. 2 is a schematic block diagram illustration showing the components of a retail checkout terminal, a product item reader device, and a retail checkout server of the checkout system according to an embodiment; and

FIG. 3 is a flow-chart illustration of a retail checkout method, according to some embodiments.

## DETAILED DESCRIPTION

Aspects of embodiments relate to checkout system of a retail store. The checkout system may comprise a checkout terminal comprising a scale for weighing a shopping receptacle loaded with product items selected by a costumer.

Various procedures may be employed for determining the type of product item loaded by the customer into his/her shopping receptacle and for acquiring individual weight-information associated with the selected product items to determine the monetary value thereof. These procedures may include executing information acquiring actions such as, for example, the acquiring of a product ID, e.g., through a computerized end-user device associated with the customer. It is noted that in some embodiments, the end-user device may be provided by the retailer or, in some other embodiments owned by the customer. Such computerized end-user device may comprise a reader device like, e.g., an optical scanner, an RFID scanner and/or a spectrometer.

As will be outlined herein below in greater detail, individual weight-information may be associated with product items of the same type. The individual weight-information includes the mean weight ("product-specific mean weight") and statistical distribution ("product-specific distribution") from the mean weight that is associated with the members of a set of product items of the same type.

A cumulative mean weight and cumulative weight distribution are determined based on accumulating data descriptive of one or more product-specific mean weights and a product-specific measure of deviation from the mean. Hence, weight-information of the loaded shopping receptacle may include the receptacle's cumulative mean weight and corresponding cumulative deviation measure.

The term "deviation" as used herein may refer to a measure of how spread the anticipated cumulative weights are from a mean. The term "distance" as used herein may refer to a measure of a difference between a number and a mean of a distribution.

The checkout system may be operative to determine anticipated cumulative weight information about a shopping receptacle loaded with product items that are intended to be removed from the retail store by a customer in a shopping cycle. The term "anticipated information" as well as variations thereof refer to information that was received by the checkout system responsive to an information acquiring action initiated by the user. Along with the acquisition of product-specific weight-information, product-specific price-information is also acquired and associated with the customer. A shopping cycle terminates after checkout.

The anticipated cumulative weight-information may include both data descriptive of mean anticipated cumulative weight and data descriptive of anticipated cumulative deviation from the mean anticipated cumulative weight. The mean anticipated cumulative weight and corresponding anticipated cumulative deviation measure may be determined based on the information acquired by the customer when selecting one or more sets of product items for which the customer intends to disburse the retailer. The product items of a first set may be of the same type but different from the product items of another set.

A customer acquires individual weight-information respective of the product items for which he/she intends to pay at checkout, for example, by employing a suitable reader device. Product-specific mean weights and measure of deviation from the mean are accumulated by the system to determine the mean anticipated cumulative weight and anticipated cumulative deviation measure. More specifically, the product-specific mean weight and deviation of a selected product item is added to the product specific mean weight(s) and deviation(s) of a previously selected product item or items.

Various procedures may be employed for determining an mean anticipated cumulative weight.

In some embodiments, product-specific population mean weights and deviations thereof and, optionally, variance, may be obtained, for example, by employing a simulation method. One exemplary simulation method that may be employed is Monte Carlo simulation.

Optionally, Monte Carlo simulation may be invoked automatically, e.g., periodically and/or, for example, when a current sample size increases by a certain quantity. Optionally, Monte Carlo may be invoked on-demand, e.g., by an Administrator of the retail checkout system.

In some scenarios, sampled weight values may not be available for members of one or more sets of product items. The weights of such product items may be determined, in some embodiments, by solving a system of linear equations, provided that such system is not underdetermined. Optionally, the results obtained when using Monte Carlo simulation may be employed for determining coefficients of the system of linear equations. Such system of linear equations may be solved, for example, using a Least Square Approximation. Optionally, various data fitting models may be employed for obtaining an approximate solution to an overdetermined system of linear equations. In some embodiments, data fitting model may be based on, e.g., linear or non-linear polynomials. Optionally, data fitting models other than polynomials may be employed.

In some scenarios, the weight of a member of one or more sets of product items may not be determinable using either simulation or by solving a system of linear equations. In such scenarios, the weight may for example be determined by employing Maximum Likelihood Estimation or by relying on manufacturer-provided weight information, optionally by associating an error (e.g., +/- 5 %) to such weight information.

The cumulative mean weight may be determined based on the results of any one of the above noted approaches for determining or estimating product-specific weights, e.g., by summing the obtained results.

During a checkout process, a validation procedure is executed in which factual cumulative weight-information is obtained by weighing the shopping receptacle by the weight scale of a retail checkout terminal. The factual cumulative weight-information may be compared against the anticipated cumulative weight-information to obtain a comparison result. When the comparison result meets one or more checkout validation-criteria, the checkout system may enable a customer to remove the loaded product items from the retail store, optionally after payment has been settled.

The validation procedure is employed since one or more product items placed by a customer in his/her shopping receptacle may or may not correspond to the type of product items and/or the quantity for which the customer acquired product-specific weight and price information, e.g., with his/her reader device.

According to some embodiments, a checkout validation-criterion may be met if a "distance" or difference of factual cumulative weight of the loaded shopping receptacle's weight from the mean anticipated cumulative weight is within an allowed range.

The allowed range may depend on the measure of how spread the anticipated cumulative weights are from the cumulative mean. For example, the larger the deviation from the mean (e.g., the larger the standard deviation from the mean), the greater may be the allowed range or, in other words, the distance of a deviation threshold from the mean anticipated cumulative weight.

In case a distance or difference in factual cumulative weight of the loaded shopping receptacle from the anticipated cumulative falls within an allowed range, the customer may complete the checkout process, which may include payment settlement and removal of the product items from the retail store. As outlined herein below in more detail, a shopping pattern of a customer may be monitored.

Various procedures may be employed to assess the product-specific deviation measure which may be, in other words, the mean and the deviation of weights from the mean for the members of a set of product items of the same type. For example, a limited number of product items of the same type may be weighed to determine a product-specific mean weight and measure of deviation from the said mean. Additionally or alternatively, using blind deconvolution for example, the sample size for one or more product items of the same type may be determined, in principle, on an unlimited number of product items which are loaded by the customers into the shopping receptacle for checkout.

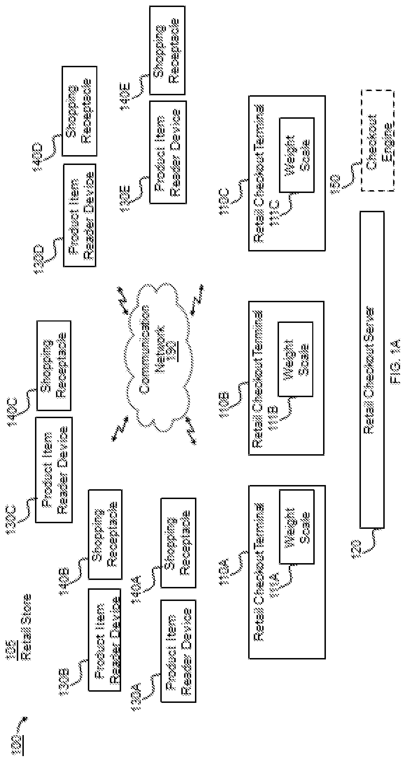

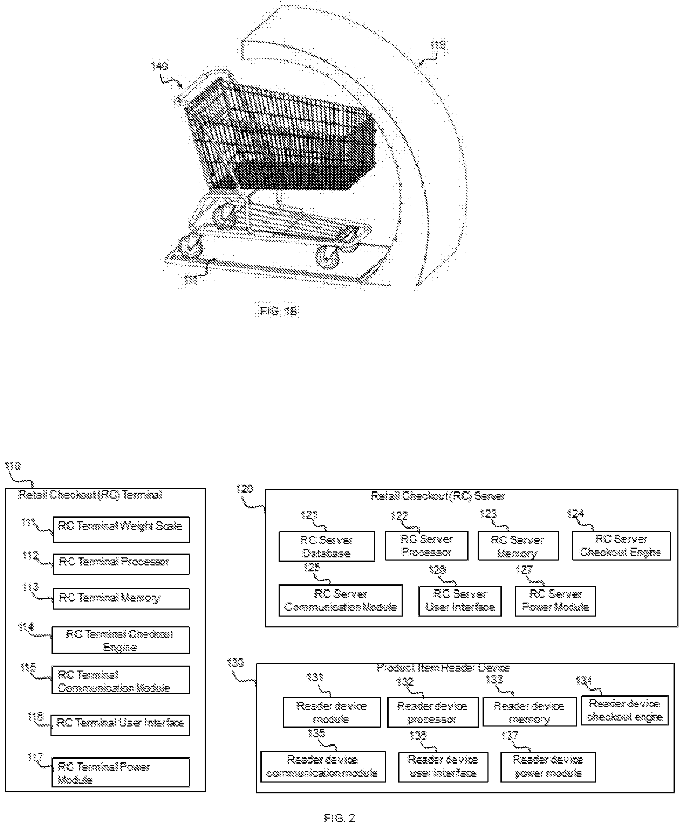

Referring now to **FIGS. 1A** and **FIG. 1B,** a retail store **105,** in which a retailer presents product items (not shown) for purchase by customers, may be equipped with a retail checkout (RC) system **100** that comprises one or more RC terminals **110** (e.g., RC terminal **110A,** RC terminal **110B** and RC terminal **110C**).

In some embodiments, a RC terminal **110** may comprise, for example, a weight scale **111** and, optionally, additional sensors. Weight scale is **111** operative to weigh a customer's shopping receptacle which may be loaded with customer-selected product items the customer intends to remove from retail store **105.** Weight scale **111** may be configured so that receptacle **140** can be pushed smoothly onto it. The additional sensors (not shown) may include, for example, at least one of a camera, spectrometer, infrared sensor, RFID sensor, and/or any other sensor that is configured and operative for gaining information about the product items placed in shopping receptacle **140** and/or the receptacle itself. In an embodiment, a RC terminal **110** may comprise a sensor mounting structure **119.** In an embodiment, the additional sensors (not shown) may be embedded in and/or arranged on sensor mounting structure **119.** In an embodiment, sensor mounting structure **119**may be arranged relative to weight scale **111** so that the additional sensors (not shown) may, at least partially, receive physical stimuli relating to shopping receptacle **140** placed onto weight scale **111.** In an embodiment, sensor mounting structure **119** may be in form of a tunnel (e.g., having a tunnel inlet and outlet); a housing, a canopy, or a hood.

RC system **100** further includes a RC server **120.** RC server **120** is operative to receive from one or more product item (PI) reader devices (RD) **130** (e.g., from product item RDs **130A-130E**) data that is descriptive of weight information respective of the product items. The one or more PI reader devices **130** may be associated with one or more respective users or customers navigating through retail store **105.**

RC system **100** may be operative to enable the implementation of a checkout method, process and/or operation of a product items placed by customers (not shown) in shopping receptacles **140** (e.g., receptacles **140A-140E** associated with RDs **130A-130E,** respectively). Such method, process and/or operation may herein be implemented by and/or referred to as a "checkout engine", which may be schematically illustrated in **FIG. 1** as a block referenced by alphanumeric label **"150".** Checkout engine **150** may for instance be operative to implement a validation procedure of the checkout process. In the checkout process, it may be determined whether a checkout validation criterion is met by comparing factual cumulative weight-information against the anticipated cumulative weight-information. When the comparison result meets one or more checkout validation-criteria, the checkout system may enable a customer to remove the loaded product items from the retail store, optionally after payment has been settled through, e.g., a RC terminal **110** and/or RC server **120.**

Further referring to **FIG. 2**, RC terminals **110** (e.g., RC terminals **110A-110C**) may include a RC weight scale **111,** a RC terminal processor **112,** a RC terminal memory **113,** a RC terminal checkout engine **114,** a RC terminal communication module **115,** a RC terminal user interface **116,** and a RC terminal power module **117** for powering the various components of RC terminals **110.** In the discussion outlined herein, components of RC terminals **110A-110E** are designated by respective alphanumeric labels. For example, RC terminal weight scales **111A-111C** refer to the weight scales of RC terminals **110A-110C,** respectively.

RC terminal weight scales **111** may be operative to detect differences in weight of, for example, 5 grams or less, 4 grams or less, 3 grams or less, 2 grams or less; or 1 gram or less. A weighing error of RC terminal weight scales **111** may in some embodiments have a uniform distribution.

In some embodiments, RC terminal weight scales **111** may be calibrated independently from each other against the same reference weight scale.

Retail checkout server **120** may include a RC server database **121,** a RC server processor **122,** a RC server memory **123,** a RC server checkout engine **124,** a RC server communication module **125,** a RC server user interface **126,** and a RC server power module **127** for powering the various components of retail checkout server **120.**

Product item reader devices **130** (e.g., reader devices **130A-130E**) may include a reader module **131,** a reader device processor **132,** a reader device memory **133,** a reader device checkout engine **134,** a reader device communication module **135,** a reader device user interface **136,** and a reader device power module **137** for powering the components of reader devices **130.** In the discussion outlined herein, components of product items reader devices **130A-130D** are designated by respective alphanumeric labels. For example, reader modules **131A-131D** refer to the modules of reader devices **130A-130D,** respectively.

The various components of RC terminals **110,** RC server **120** and/or product item reader devices **130** may communicate with each other over one or more communication buses (not shown) and/or signal lines (not shown).

A server may for example relate to one or more servers, storage systems, cloud-based systems and/or services associated with the retail store.

A product item RD **130** may be embodied or included in a computerized end-user device. Such computerized end-user device may, for example, include a multifunction mobile communication device also known as "smartphone", a laptop computer, a tablet computer, a personal digital assistant, a workstation, a wearable device (including, e.g., optical head mounted displays including glasses for instance), a handheld computer, a notebook computer and/or a vehicular device.

The term "processor" as used herein may additionally or alternatively refer to a controller. Such processor may relate to various types of processors and/or processor architectures including, for example, embedded processors, communication processors, graphics processing unit (GPU)-accelerated computing, soft-core processors and/or embedded processors.

According to some embodiments, RC terminal memory **113,** RC server memory **123** and/or reader device memory **133** may include one or more types of computer-readable storage media. For example, RC terminal memory **113,** RC server memory **123** and/or reader device memory **133** may include transactional memory and/or long-term storage memory facilities and may function as file storage, document storage, program storage, or as a working memory. The latter may for example be in the form of a static random access memory (SRAM), dynamic random access memory (DRAM), read-only memory (ROM), cache or flash memory. As working memory, RC terminal memory **113,** RC server memory **123** and/or reader device memory **133** may, for example, process temporally-based instructions. As long-term memory, RC terminal memory **113,** RC server memory **123** and/or reader device memory **133** may for example include a volatile or non-volatile computer storage medium, a hard disk drive, a solid state drive, a magnetic storage medium, a flash memory and/or other storage facility. A hardware memory facility may for example store a fixed information set (e.g., software code) including, but not limited to, a file, program, application, source code, object code, and the like. For the purposes of long-term storage, data fragments may be stored on such long-term memory.

RC terminal communication module **115,** RC server communication module **125** and reader device communication module **135** may communicate with each other over a communication network **190** (schematically shown in **Fig. 1A**) and may, for example, include I/O device drivers (not shown) and network interface drivers (not shown). A device driver may for example, interface with a keypad or to a USB port. A network interface driver may for example execute protocols for the Internet, or an Intranet, Wide Area Network (WAN), Local Area Network (LAN) employing, e.g., Wireless Local Area Network (WLAN)), Metropolitan Area Network (MAN), Personal Area Network (PAN), extranet, 2G, 3G, 3.5G, 4G including for example Mobile WIMAX or Long Term Evolution (LTE) advanced, Bluetooth®, ZigBee™ and/or any other current or future communication network, standard, and/or system.

RC terminal memory **113,** RC server memory **123** and/or reader device memory **133** may include instruction which, when executed e.g. by the respective RC terminal processor **112,** RC server processor **122** and/or reader device processor **132,** may cause the execution of the retail checkout method, process and/or operation. As already indicated herein, such method, process and/or operation may herein be implemented by and/or referred to as checkout engine **150.** Checkout engine **150** may be implemented in any suitable device, fully or partially. For example, checkout engine **150** may be included, fully or partially, in a reader device associated to a customer and/or in a server.

Reader device **130** may be respectively associated with the customers. For example, a first customer may be the owner of first reader device **130A** and a second customer may be the owner of second reader device **130B.** According to some embodiments, product-specific weight-information associated with a product item selected by a customer may be received at reader devices **130** via reader module **131** during a data acquisition procedure. According to some other embodiments, product-specific weight information may be acquired during checkout. For example, product-identifying information of all of the selected product items may be provided to the server, e.g., via the checkout terminal, for determining accumulated anticipated weight information. However, merely to simplify the discussion that follows, without be construed as limiting, it is considered that weight information is acquired by the customer, through his/her reader device.

Such data acquisition procedure may include receiving data descriptive of product-specific weight-information wirelessly (e.g., optically) for example. Such weight-information may for instance be encoded in one- or two-dimensional machine-readable representation (e.g., barcodes) and which may be acquired therefrom by reader module **131**. Reader modules **131** may for example be embodied by an optical reader and/or a receiver (e.g., a receiver operative to receive signals from radio-frequency identification (RFID) tags embedded in the product item). The decoding of data descriptive of product-specific weight-information may be accomplished by checkout engine **150,** for example, by the part of RC server checkout engine **124** of server **120**. According to some embodiments, a reader module may additionally or alternatively be included at a checkout terminal.

As already briefly mentioned herein, various procedures may be employed to assess the statistical distribution of the weight for a set of product items of the same type.

According to some embodiments, identical weight information (which may be pre-stored in checkout server **120**) may be associated with product items of the same type. For example, a product-specific mean weight and product-specific measure of deviation from the mean may be associated with nominal 500 gram packages of a specific sort of Loacker® biscuits, based on a sample population of biscuits packages.

According to some embodiments, a measure of how spread-out the weights are from the product-specific mean may be determined for a sample population of product items of the same type.

Accordingly, the number of product items of the same type that may be weighed to determine the mean weighed value may be capped. The product items may be weighed, e.g., by a retailer or by the wholesaler, prior to providing the product items in retail store **105** for sale.

In some embodiments, an assumption may be made regarding the statistical distribution of the weight. It may for example be assumed that the weight for a product item of the same type is normally distributed around the mean weight. Correspondingly, a Student's t-distribution may be assumed for the sample population.

Furthermore, according to some embodiments, a product-type specific distance threshold from the mean may be selected for each set of product items of the same type. When the customer acquires weight information for product items of at least one type, respective product-type specific distance thresholds may be taken into account to determine a cumulative anticipated distance threshold. The obtained anticipated cumulative distance threshold may serve as a basis for a checkout validation-criterion.

According to some embodiments, the product-type specific distance threshold may for example be defined as a multiplicative factor of a standard deviation from the mean weight respective of a set of product items of the same type. Correspondingly, the anticipated cumulative distance threshold may be defined based on one or more product-type specific deviation thresholds. For example, a plurality of product-specific distance thresholds respective of product items for which the customer acquired weight-information, may be averaged by checkout validation engine **150** to obtain the anticipated cumulative distance threshold.

According to some embodiments, depending on the type of product item, a plurality of different sample sizes may be used to obtain weight information for a respective plurality of sets of product items. For example, a first sample size (e.g., 30 product items) may be used for a first set and second set of product item of the same type, and a second sample size (e.g., 50 product items) may be used for a third set, fourth set and fifth set of product items of the same type.

In some other embodiments, the sample size of the population may be increasing, e.g., in principle ad infinitum, for example, with the number of product items that are processed through the checkout process. Limitations on an increasing sample size may be system (e.g. hardware) dependent. Correspondingly, product-specific weight-information for a given type of product items may be derived from a plurality of consecutive samples.

In some embodiments, product-specific mean weights, deviations thereof and, optionally, variance, may be determined, for example, by employing statistical modeling methods. One exemplary statistical modeling method that may be employed is Monte Carlo simulation.

The domain of possible inputs to the simulation for the random sampling is defined by the distribution (e.g., normal distribution) and the corresponding Cumulative Distribution Function (CDF). The CDF is defined through the samples.

In cases where sampled product weights are independent observations from a normal distribution, the corresponding sample variance distribution of the weights of a population of products may follow a scaled Chi-squared distribution, which may be expressed as follows:

$$(n-1)\frac{s^2}{\sigma^2} \sim \mathrm{X}^2_{n-1} \qquad (1)$$

Based on values relating to the variance of the weight samples, Monte Carlo Simulation may be employed for determining the parameters of the Xi-squared distribution function for the weights of a population of product items of the same type. Optionally, a critical value of the Xi-squared distribution function may, for example, equal 0.05 or less, 0.025 or less, 0.01 or less, or 0.005 or less. The degree of freedom is determined by the equation n-1, wherein n denotes the sample size.

Moreover, based on the obtained parameters of the Xi-squared distribution function, parameters (e.g., the standard deviation and a mean) of a normal distribution of the weight for a population of product items of the same type may be determined. Such normal distribution of weights of a population of product items of the same type may be expressed as follows:

$$\mu \sim N(\bar{x}, \frac{\sigma}{\sqrt{n}}) \tag{2}$$

Optionally, t-statistics may be applied in the Monte Carlo Simulation in relation to the mean weight $\mu$ of the population a specific product, to calculate the variance of the population:

$$\frac{\bar{x} - \mu}{s/\sqrt{n}} \sim t_{n-1} \tag{3}$$

$\sigma$ - represents the Standard Deviation of a population of a product
S - represents the variance of a sample of the product
$\mu$ - represents a Population Mean of the product
$\bar{x}$ - represents a Sample Mean of the product
n - represents the sample size
t - represents a ratio of the departure of an estimated parameter from its notional value and standard error

In an embodiment, at least 1000, 2000, 3000, or at least 4000 runs may be executed for estimating values of the parameters relating to the above noted Xi-square and Normal Distributions.
Optionally, T-statistics may be used for estimating the variance of weight for a population of products.
In some scenarios, data relating to sampled weights may not be available for members of one or more sets of product items. The weights of such product items may be determined, in some embodiments, by solving a system of linear equations, provided that such system is not underdetermined. Optionally, the results which were obtained when using the simulation methods may be employed for approximating a solution for the system of linear equations. Such solution may be in the form of a linear or non-linear function.

$$\begin{bmatrix} q_{11} & q_{21} & \cdots & q_{N1} \\ q_{12} & q_{22} & \cdots & q_{N2} \\ \vdots & \vdots & \ddots & \vdots \\ q_{1M} & q_{2M} & \cdots & q_{NM} \end{bmatrix} \begin{bmatrix} \hat{\mu}_1 \\ \hat{\mu}_2 \\ \vdots \\ \hat{\mu}_N \end{bmatrix} \approx \begin{bmatrix} w_1 \\ w_2 \\ \vdots \\ w_M \end{bmatrix} \tag{4}$$

wherein:

$q_{ij}$ - designates the quantity of a specific product selected by a customer
$\mu_n$ - designates the mean weight of a specific product
$w_m$ - designates the factual cumulative weight checked out respective of each customer

In an embodiment, to solve the system of linear equations, Least Square may be employed. Each weight calculated for a specific product using the above-noted System of Linear Equations may be referred to as a sample of the respective product population having any kind of distribution including, for instance, a normal distribution.
In an embodiment, the statistical parameters (e.g., mean, standard deviation, variance) for the same product may be determined under the assumption of normal distribution of the calculated "sample" weight.
Newly calculated "sample" mean weights may be added to all previously calculated "sample" mean weights for updating mean parameter values.
In some scenarios, the weight of a member of one or more sets of product items may neither be determinable using numerical methods nor by solving a system of linear equations. In such scenarios, the weight may for example be determined by employing Maximum Likelihood Estimation for estimating a mean weight for a set of product items, or by relying on manufacturer-provided weight information, optionally by adding to it an error (e.g., +/- 5 %) for such manufacturer-provided weight information.
One example of a Maximum Likelihood Estimation function may be expressed, for example, as follows:

$$C_{ML} = \arg\min_{\hat{\mu}\in R^n, \hat{v}\in R^{+n}} \sum_{i=1}^{m} \|\hat{y}_{i,\hat{\mu},\hat{v}} - y_i\|_2^2 \qquad (5)$$

when:

$$\hat{\mu}_i = q_i \cdot \hat{\mu} \quad , \quad \hat{v}_i = q_i \cdot \hat{v} \qquad (6)$$
$$\hat{y}_{i,\hat{\mu},\hat{v}} = Softmax(-(w_i - \hat{\mu}_i)^2/2v_i, -(w_i + c - \hat{\mu}_i)^2/2v_i)$$

- $y_i$ designates a threshold for "criminalizing" a customer.
- $v$ - designates the variance of factual cumulative weights per customer
- $c$ - designates acceptable weight difference between a factual and anticipated cumulative weight for a customer
- $w_i$ - designates factual cumulative weight for a set of product items.
- $\hat{\mu}$ - designates the mean cumulative weight for a set of product items
- $q$ - designates the quantity of product items of a set that the customer has declared to have loaded into the shopping receptacle(s) in a shopping cycle.

In some embodiments, the results yielded from applying Maximum Likelihood and/or the information provided by the products' manufacturers may be employed to reduce the number of unknown parameters in the system of linear equations exemplified herein.

According to some embodiments, blind deconvolution may be employed which may allow not imposing constraints on the number of product items for determining product-specific weight-information.

The factual cumulative weight of a loaded shopping receptacle as measured by a weighing scale (e.g., RC terminal weight scale **111A**) and the distance from of the factual cumulative weight from the anticipated cumulative weight may form a basis for determining the contributions in deviation of each product item of the same type to the shopping receptacle's cumulative deviation.

For instance, the anticipated cumulative weight of a shopping receptacle may be determined based on the nominal weights assigned to the product items loaded into the shopping receptacle. The shopping receptacle's factual cumulative weight and distance from the anticipated cumulative weight may then be used to determine the contribution in deviation of each product item of the same type to the factual cumulative deviation in weight. The data is accumulated from a plurality of customers placing their shopping receptacle **140** onto scale RC terminal weight scales **111** to estimate the weight distribution for each set of product items of a given type, instead of limiting sample size and making assumptions about the weight distribution (like for instance assuming that the weight for product items of the same is normally distributed).

For instance, of 10000 shopping receptacles that were weighed at RC terminals **110,** 8000 shopping receptacles may be loaded with bottles of nominal 1.5 Liters Coca Cola®. For the bottles of Coca Cola® of the same type (e.g., having identical nominal weight assigned) that are loaded in the 8000 shopping receptacles, the respective product-specific mean weights and product-specific measure of deviation from the mean may be determined using blind deconvolution, numeric methods, and/or any other suitable method.

In some embodiments, the weight-information derived from a capped sample (e.g., Student's t-distributed sample) may be compared against weight-information derived from the increasing sample size. It may for example be determined that when using an increasing number or unlimited number of sample, the weights of a product item of the same type may be substantially normally distributed with trimmed tails, whereas the weights derived from capped sample was assumed to be fully normally distributed and non-trimmed. If the comparison yields that the difference in the means exceeds a threshold, the assumptions made for the capped sample size may be discarded and the weight information derived from the increasing sample size may be used to arrive at anticipated cumulative weight-information for a loaded shopping receptacle **140.**

According to some embodiments, depending on the type of product item being selected for purchase by the customer, weight-information received may include pre-stored weight information and/or on-the-spot acquired weight information. Pre-stored weight information may be pre-stored, e.g., in RC server database **121.** Quantity-dependent weight information may be obtained on-the-spot by weighing in the store a customer-selected weighable quantity of a given weighable product and/or by acquiring pre-stored weight-information of such weighable product. A weighable product may relate to products that are not offered to the customer for sale at a predetermined, unitary quantity. In other words, the purchasable quantity of such product may be individually and freely selectable by the customer and is, in general, not dictated according to a standardized or predetermined packaging of the product item. Such given weighable products may for example include fruits, vegetables, meat, fish, cheese, salads, pastries and/or spices for example.

Weighable products may or may not be pre-packaged. However, such pre-packaging may usually be done by a person serving a counter of retail store **105** where weighable product items may be offered to the customer for sale. Checkout engine **150,** in conjunction with the image capturing device(s), may be operable to compare between a product-ID the customer may assign to a weighable product, and the weighable product item actually selected by him/her for placing into shopping receptacle **130**. A customer may for example erroneously select via a user interface (e.g., RD user-interface **136**) the product-ID assigned to Bananas for weighing, but place Cucumbers onto the weight to receive information about the amount due. Checkout engine **150** may be operative to detect such discrepancy between the product-ID and the customer-selected weighable product items, by comparing data ("image-data") descriptive of an image of the customer-selected weighable product item with data ("product-data") descriptive of the customer-selected product-ID. If the image-data does not match the product-data, a corresponding output may be provided, e.g., to the customer or the cashier.

According to some embodiments, a spectrometer may be employed to determine the type of weighable product item selected by the customer.

According to some embodiments, weight-information may also be acquired on-the-spot for each one of the product items for which it may for example be difficult or virtually impossible to make assumptions regarding statistics of the weights. Such product items may herein be referred to as "non-standard product items".

Weight-information for weighable and/or non-standard product items may only include the actually measured weight and be free of information relating to a deviation from a mean weight. In some embodiments, the weight-information may include information about the uniform distribution of the weight from a mean. The measured weight of such product items may be individually encoded, e.g., using a barcode or RFID.

Checkout engine **150** may cause the acquired weight information (pre-stored and quantity-dependent) as well as price information respective of the customer-selected product item received at reader devices **130** to be transmitted, for example, to checkout server **120**. In server **120** for example, the acquired weight-information may be totaled by checkout engine **150** to obtain anticipated cumulative weight-information. Price information respective of the product items for which weight information was acquired by the customer may be totaled to obtain anticipated cumulative price information.

Checkout system **100** may include one or more image capturing devices (not shown) assisting in monitoring actions undertaking by customers navigating about and shopping in retail store **105** for product items. Image capturing devices may be employed at locations where product item whose costs are quantity-dependent are offered for purchase. The image capturing devices may for example be employed to determine whether the product ID associated by a customer to a product item match.

After the customer has completed placing the product items in shopping receptacle **140,** he/she proceeds to one of the RC terminals **110**. RC terminals **110** may or may not be cashier-operated.

The customer may place his/her shopping receptacle (e.g., shopping receptacle **140B**) onto a scale weight (e.g., RC terminal weight scale **111A**) for providing RC system **100** with factual cumulative weight-information of the shopping receptacle. The factual cumulative weight-information provided by RC terminal weight scale **111A** and respective of receptacle **140B** for example, may be transmitted, e.g., to server **120.**

Furthermore, the anticipated cumulative weight-information respective of a shopping receptacle (e.g., receptacle **140B**) may be brought in association with the factual cumulative weight information provided by the customer at the respective RC terminals **110.**

According to some embodiments, a RC terminal (e.g., RC terminal **110A**) may for example be provided with reader device identifying information (RD-ID) of e.g., RD **130B** so that anticipated cumulative weight information which was obtained from acquiring weight-information through RD **130B** can be associated with the factual cumulative weight information obtained by weighing shopping receptacle **140B** at RC terminal **110A.** For example, the customer associated with RD **130B** may engage RD user interface **130B** for providing the RD-ID respective of RD **130B** to RC terminal **110A** via from RD communication module **135B** and RC terminal communication module **115A.**

In some embodiments, the RD-ID may be entered manually into the respective RC terminal, e.g., by the cashier or the customer.

According to some other embodiments, a customer may register him/herself, e.g., via his/her RD **130** with a RC terminal (e.g., RC terminal **110A**) prior to starting navigating retail store **105** for purchasing product items. According to some further alternative embodiments, a customer may be assigned to a RC terminal (e.g., RC terminal **110A**) by checkout engine **150,** for example, to increase (e.g., optimize or maximize for) customer throughput per RC terminal, e.g., according to predetermined optimization constraints. A customer authentication procedure (e.g., based on facial recognition and/or challenge-response procedure) may be employed to determine whether the customer who engages with a RC terminal to provide factual weight-information is indeed associated with the RD **130** presented by the customer.

During the checkout process, validation engine **150** may compare the factual cumulative weight-information against the anticipated cumulative weight-information to obtain a comparison result. In the event that the comparison result meets one or more checkout validation-criteria, checkout system **100** may enable a customer to remove the loaded product items from retail store **105,** optionally after payment for the product items has been settled. The shopping receptacle with the loaded product items may be removed from retail store **105** without the customer having to unload from and reload the product items back into his/her shopping receptacle.

A checkout validation-criterion may for example be met if the distance of the factual cumulative weight of the loaded shopping receptacle's weight from the mean anticipated cumulative weight falls within an allowed range, in which case the customer may proceed with the checkout process.

Assuming for example that for each set of product items the weight is normally distributed, the anticipated cumulative weight may also be considered to be normally distributed. A checkout validation-criterion may thus for example be met if the factual cumulative weight (FCW) falls within a range defined by a multiplicative factor of the anticipated cumulative standard deviation (OSD). For instance, the checkout validation-criteria may be met if FCW<3*OSD.

According to some embodiments, the one or more checkout validation-criteria may be adjusted in accordance with the type of product item; retailer chain; expiry date of a product item; customer; group of customers; retail store location; calendric weekday; month and/or year.

For instance, a checkout validation-criteria may be customer-dependent, i.e., personalized. For instance a first multiplicative factor of a standard deviation may be assigned to a first customer and a second multiplicative factor, different from the first multiplicative factor, may be assigned to the second customer navigation about retail store **105.** A checkout validation-criteria may thus for example be met for the first customer if FD<3*SD, and the checkout validation-criteria may be met for the second customer if FD<5*SD. Additionally or alternatively, checkout validation engine **150** may assign different validation-criteria to different customers, for example, based on the customer's shopping habits.

According to some embodiments, checkout validation engine **150** may randomly determine (anticipated cumulative) deviation thresholds, e.g., for different customers. It should be noted that the term "randomly" as used herein may also encompass the meaning of the terms "substantially randomly" and/or "pseudo-randomly".

According to some embodiments, the customers' shopping behavior may be monitored. Parameters that may be monitored may for example include the selection of product items (e.g., quantity and/or type product items selected) to identify specific changes in shopping patterns (e.g., changes with respect to history of anticipated cumulative weights for a given customer); changes in factual cumulative weights from an mean anticipated cumulative for a plurality of checkouts for a given customer; navigation time of customer about retail store **105;** dwell time of a customer in a particular area of retail store **105;** corrections and/or cancelations made with his/her RD **130** when acquiring weight information; and/or time stamps when customers enter and/or leave retail store **105.** Various sensors, including for example cameras (not shown) may be used to monitor the behavior of customers navigating about retail store **105.**

The distances of factual cumulative weights from an mean anticipated cumulative respective of a given customer may be monitored by checkout validation engine **150** through RC terminal weight scales **111.** Data descriptive of the distances of factual cumulative weights may for example be stored in RC server database **121.** The monitoring may be performed to identify recurring patterns. If for example a recurring pattern in distances from the deviation threshold is identified, validation engine **150** may for example provide an indication (e.g., via the respective RC terminal **110A**) that weight-information respective of the product items placed in the shopping receptacle is to be reacquired to determine whether the customer engages in fraudulent activity. The reacquisition of weight-information may for example be performed by personnel and with equipment of retail store **105** and/or by reader device **130** which is associated to the customer.

According to some embodiments, historical values of anticipated cumulative weights may be stored by checkout validation engine **150** in server database **120.** A history of anticipated cumulative weights of a given customer may be expressed in the distribution of anticipated cumulative weights as acquired for a plurality of checkouts processed for the same customer. In other words, the anticipated cumulative weight of a respective plurality of checkouts may be in some embodiments be referred to as a random variable, in addition to the weight of the individual product items loaded in the shopping receptacle.

Based on a customer's history of anticipated cumulative weights (and which were validated with respect to corresponding factual cumulative weights), checkout validation engine **150** may estimate, based on a currently anticipated cumulative weight, the likelihood that the customer has forgotten to place a product item in his/her shopping receptacle **140.** The likelihood may for example be determined relative to one or more deviation thresholds. For example, if the current anticipated cumulative weight is smaller than the historical mean of anticipated cumulative weights, and the difference between current anticipated cumulative weight (e.g., 52 kg) and the historical mean of anticipated cumulative weights (e.g., 48 kg) exceeds a deviation threshold, checkout engine **150** may provide a corresponding output, e.g., to the customer via product item RD **130.** In some embodiments, checkout engine **150** determines whether the number of product items placed in the shopping receptacle matches the number of product items for which the customer acquired product information.

In one embodiment, the current anticipated cumulative weight may be taken into account for determining the historical mean. In another embodiment, only anticipated cumulative weights previous to the current anticipated cumulative weight may be taken into account for determining the historical mean. Checkout validation engine **150** may estimate, based on the difference in the mean weight and the historical mean which product item or items the given customer may have forgotten to place in his/her shopping receptacle **140.**

According to some embodiments, the current anticipated cumulative weight may be compared against a measure in deviation (e.g., standard deviation) from the historical mean. Accordingly, a deviation-difference threshold may be set with respect to the measure of deviation (e.g., standard deviation) from the historical mean.

The deviation-difference threshold can be defined as a multiplicative factor of a standard deviation of historical anticipated cumulative weights of shopping receptacles associated with a given customer.

For example, if the current anticipated cumulative weight is below the deviation-difference threshold, checkout engine **150** may provide a suitable output to the given customer.

The current mean anticipated cumulative may for example be 48 kg, while the historical average of mean anticipated cumulatives may be 55 kg. The standard deviation of historical anticipated cumulative weights from the historical average may be 2.3 kg. Accordingly, the current anticipated cumulative weight may deviate from the standard deviation by (48 kg-55 kg)/2.3kg = 3.4 standard deviations. Further, the deviation-difference threshold may be set as 0.3 standard deviations below the lower limit of 3 standard deviations, i.e., as 3.3 standard deviations below the mean. Hence, the current anticipated cumulative weight by 0.1 standard deviations lower from the deviation-difference threshold. Responsive on determining the said difference of 0.1 standard deviations from the deviation-difference threshold, checkout engine **150** may provide the given customer with an output indicating that he/she might have forgotten to proceed with a product item to checkout. Moreover, based on the difference from the deviation-difference threshold, checkout engine **150** may estimate and suggest to the customer which product item he/she might have forgotten to place in shopping receptacle **130.**

It is noted that in some embodiments, the factual cumulative mean may be compared against the deviation-difference threshold to identify whether the customer has forgotten to place a product item into his/her shopping receptacle.

In some embodiments, a plurality of historical anticipated cumulative weights may be subdivided into a plurality of groups e.g., by checkout engine **150,** for example, depending on the product items and/or deviations from the mean anticipated cumulative weight. For example, anticipated cumulative weights may be associated with a first group if their weights are above the mean and deviate from the standard deviation within a band or range of 0.5 to less than 1.5 standard deviations; and anticipated weights may be associated with a second group if their weights are above the mean and deviate from the standard deviation in band or range from 1.5 to less than 3 standard deviations. Checkout engine **150** may determine based on the current anticipated cumulative weight and/or the product items scanned by the customer, into which one of the two groups a current anticipated cumulative weight of a given respective shopping receptacle belongs. Based the association of the current anticipated cumulative weight to a group, checkout engine **150** may estimate the likelihood that the customer has forgotten to shop for a product item. In the event checkout engine **150** estimates that such likelihood exceeds a threshold, the checkout engine **150** may provide the customer with a corresponding output.

In some embodiments, the identification of product items may be based on a weight uniquely assigned to each one of the product items, even for product items of the same type. In other words, a weight-ID may be assigned to each product items for example in RC server database **121.** Based on weight alone, checkout engine **150** may be operative to identify each product item individually placed on RC terminal weight scale **111.** Correspondingly, checkout engine **150** may be operative to determine whether the factual cumulative weight of a shopping receptacle matches the anticipated cumulative weight and, accordingly, allow for the customer to proceed with the checkout. Whether a factual cumulative weight matches the anticipated cumulative weight may be determined, e.g., within an error which may be dependent on the uniform distribution of the weight scale employed for assigning a weight-ID and/or on the uniform distribution of RC terminal weight scale **111.**

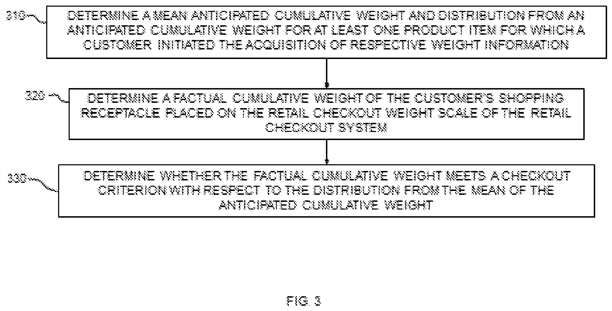

Additional reference is made to **FIG. 3.** A indicated by box **310,** the method may include, for example, determining a mean anticipated cumulative weight and distribution from the mean anticipated cumulativeweight for at least one product item for which a customer initiated the acquisition of respective-information.

For example, step **310** may comprise employing, for product items for which sample weights are available defining parameter constraints, Monte Carlo simulation by randomly generating values of parameters that are descriptive of Xi and Normal distributions. Based on these parameters, a population mean value and a standard deviation can be determined.

As indicated by box **320,** the method may include determining a factual cumulative weight of the customer's shopping receptacle placed on the retail checkout weight scale of the retail checkout system. As indicated by box **330,** the method may include determining whether the factual cumulative weight meets a checkout criterion with respect to the distribution from the mean anticipated cumulative weight.

For example, any digital computer system (exemplified herein as retail checkout system **100**) can be configured or otherwise programmed to implement a method disclosed herein, and to the extent that a particular digital computer system is configured to implement such a method, it is within the scope of the disclosure. Once a digital computer system is programmed to perform particular functions pursuant to computer-readable and executable instructions from program software that implements a method disclosed herein, it in effect becomes a special purpose computer particular to an embodiment of the method disclosed herein. The techniques necessary to achieve this are well known to those skilled in the art and thus are not further described herein. The methods and/or processes disclosed herein may be implemented as a computer program product such as, for example, a computer program tangibly embodied in an information carrier, for example, in a non-transitory tangible computer-readable or non-transitory tangible machine-readable storage device and/or in a propagated signal, for execution by or to control the operation of, a data processing apparatus including, for example, one or more programmable processors and/or one or more computers. The terms "non-transitory tangible computer-readable storage device" and "non-transitory tangible machine-readable storage device" encompasses distribution media, intermediate storage media, execution memory of a computer, and any other medium or device capable of storing for later reading by a computer program implementing embodiments of a method disclosed herein. A computer program product can be deployed to be executed on one computer or on multiple computers at one site or distributed across multiple sites and interconnected by a communication network.

Computer-readable and executable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable and executable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable and executable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

## Claims

1. A retail checkout system for allowing a plurality of customers to checkout one or more product items of at least one set of product items of a given type that has an estimated mean weight and a deviation from the estimated mean weight associated with the set of product items, the system (100) comprising:

   a retail checkout weight scale (111);
   **characterized in that**
   the system (100) further comprises a checkout engine (124; 150) that is operative to:

   determine a mean anticipated cumulative weight and a distribution from the mean anticipated cumulative weight for at least one product item for which a customer initiated the acquisition of respective weight-information (310);
   determine a factual cumulative weight of a customer's shopping receptacle placed on the retail checkout weight scale (320); and
   determine whether the factual cumulative weight meets a checkout criterion with respect to the distribution from the mean anticipated cumulative weight (330).

2. The retail checkout system according to claim 1, wherein the checkout engine (124; 150) is further operative to:

   monitor the shopping behaviour of a customer, and based on the monitored shopping behaviour,
   associate a shopping pattern to the customer.

3. The retail checkout system according to claim 1 or 2, wherein the determination of a mean anticipated cumulative weight and a distribution from the mean anticipated cumulative weight for at least one product item for which a customer initiated the acquisition of respective weight-information, comprises:

   estimating, based on sample weights of product items of the same type, parameters of a Xi distribution function by employing Monte Carlo simulation, and
   based on the estimated parameters of the Xi distribution function, estimating parameters of a Normal Distribution of weights for a population of sets of product items.

4. The retail checkout system according to claim 3, wherein the estimating of parameters of a Xi-distribution comprises estimating a sample variance of weights for a population of product items of the same type.

5. The retail checkout system according to claim 3 or 4, further comprising, based on the estimated parameters the Xi-distribution function, estimating a mean weight and standard deviation for the population of product items.

6. The retail checkout system according to any of claims 1 to 5, wherein the determination of the mean anticipated cumulative weight further comprises, for product items for which no sampled weights are available:

generating a system of linear equations, wherein each equation describes, per a customer that has checked out, the factual cumulative weight with the number of product items selected by the customer multiplied by a respective unknown weight of the selected product item, and
solving the system of linear equations for the respective unknown weights, provided that such system of linear equations is not underdetermined.

7. The retail checkout system according to claim 6, wherein the solving of system of the linear equations comprises employing a least square fitting method.

8. The retail checkout system according to any of claims 1 to 7, wherein the checkout engine (124; 150) is further operative to:
determine, based on the nominal weights assigned to the product items loaded into the shopping receptacle, the anticipated cumulative weight of the shopping receptacle.

9. The retail checkout system according to any of claims 1 to 8, wherein the determination of the mean anticipated cumulative weight comprises applying a Maximum Likelihood Estimation to obtain an estimate of a mean weight for a set of product items of the same type.

10. The retail checkout system according to any of claims 1 to 9, wherein the checkout engine (124; 150) enables settling payment for product items selected and placed by the customer into the shopping receptacle without requiring the removal of the product items from the shopping receptacle.

11. A computer program product for allowing a plurality of customers to checkout one or more product items of at least one set of product items of a given type that has an estimated mean weight and a deviation from the estimated mean weight associated with the set of product items, the computer program product comprising: a non-transitory tangible storage medium readable by a processing circuit and storing instructions for execution by the processing circuit for performing a method comprising:

determining a mean anticipated cumulative weight and a distribution from the mean anticipated cumulative weight for at least one product item for which a customer initiated the acquisition of respective weight-information (310);
determining a factual cumulative weight of a customer's shopping receptacle placed on the retail checkout weight scale (320); and
determining whether the factual cumulative weight meets a checkout criterion with respect to the distribution from the mean anticipated cumulative weight (330).

12. The computer program product of claim 11, further operative to:

monitor the shopping behaviour of a customer, and based on the monitored shopping behaviour, associate a shopping pattern to the customer.

13. The computer program product of claims 11 or 12, wherein the determining of a mean anticipated cumulative weight and distribution from the mean anticipated cumulative weight for at least one product item for which a customer initiated the acquisition of respective weight-information, comprises:

estimating, based on sample weights of product items of the same type, parameters of Xi distribution function by employing Monte Carlo simulation, and

based on the estimated parameters of the Xi distribution function, estimating parameters of a Normal Distribution of weights for a population of sets of product items;

in particular wherein the estimating of parameters of a Xi-distribution comprises estimating a sample variance of weights for a population of product items of the same type.

14. The computer program product according to claim 13, further comprising, based on the estimated sample variance of weights of a population of product items, estimating a mean weight and a standard deviation for the population of product items.

15. A method for allowing a plurality of customers to checkout one or more product items of at least one set of product items of a given type that has an estimated mean weight and a deviation from the estimated mean weight associated with the set of product items, comprising:

determining a mean anticipated cumulative weight and a distribution from the mean anticipated cumulative weight for at least one product item for which a customer initiated the acquisition of respective weight-information (310);
determining a factual cumulative weight of a customer's shopping receptacle placed on the retail checkout weight scale (320); and
determining whether the factual cumulative weight meets a checkout criterion with respect to the distribution from the mean anticipated cumulative weight (330).

16. The method of claim 15, further comprising:

monitoring the shopping behaviour of a customer, and based on the monitored shopping behaviour, associating a shopping pattern to the customer.

17. The method of claim 15 or 16, wherein the determining of a mean anticipated cumulative weight and a distribution from the mean anticipated cumulative weight for at least one product item for which a customer initiated the acquisition of respective weight-information, comprises:

estimating, based on sample weights of product items of the same type, parameters of a Xi distribution function by employing Monte Carlo simulation; and
based on the estimated parameters of the Xi distribution function, estimating parameters of a Normal Distribution of weights for a population of sets of product items;

in particular wherein the estimating of parameters of a Xi-distribution comprises estimating the sample variance of weights for a population of product items of the same type and/or further comprising, based on the estimated parameters the Xi-distribution function, estimating a mean weight and a standard deviation for the population of product items.

18. The method of any of claims 15 to 17, wherein the step of determining the mean anticipated cumulative weight further comprises, for product items for which no sampled weights are available:

generating a system of linear equations, wherein each equation describes, per a customer that has checked out, the factual cumulative weight with the number of product items selected by the customer multiplied by a respective unknown weight of the selected product item, and
solving the system of linear equations for the respective unknown weights, provided that such system of linear equations is not underdetermined, in particular wherein the solving of system of the linear equations comprises employing a least square fitting method;

and/or wherein the determining of the anticipated cumulative weight of a shopping receptacle is based on the nominal weights assigned to the product items loaded into the shopping receptacle;
and/or wherein the determining the mean anticipated cumulative weight comprises applying a Maximum Likelihood Estimation to obtain an estimate of a mean weight for a set of product items of the same type.

19. A computer program product directly loadable into the internal memory of a computer, comprising software code portions for performing the steps of any of claims 15 to 18 when the product is run on the computer.

20. A non-transitory tangible computer readable storage medium storing a set of instructions that are executable by at least one processor (122) of a server (120) to cause the server (120) to perform a method for allowing a plurality of customers to checkout one or more product items of at least one set of product items of a given type that has an estimated mean weight and a deviation from the estimated mean weight associated with the set of product items, the method comprising:

determining a mean anticipated cumulative weight and distribution from the mean anticipated cumulative weight for at least one product item for which a customer initiated the acquisition of respective weight-information (310); determining a factual cumulative weight of a customer's shopping receptacle placed on a retail checkout weight scale (320); and

determining whether the factual cumulative weight meets a checkout criterion with respect to the distribution from the mean anticipated cumulative weight (330).

21. The non-transitory tangible computer readable storage medium of claim 20, wherein the method further comprises:

monitoring the shopping behaviour of a customer, and based on the monitored shopping behaviour, associating a shopping pattern to the customer.

**Patentansprüche**

1. Einzelhandelskassensystem, um einer Vielzahl von Kunden zu ermöglichen, einen oder mehrere Produktartikel von zumindest einem Satz von Produktartikeln eines gegebenen Typs auszuchecken, der ein geschätztes mittleres Gewicht und eine Abweichung von dem geschätzten mittleren Gewicht, das dem Satz von Produktartikeln zugehörig ist, aufweist, wobei das System (100) umfasst:

eine Einzelhandelskassenwaage (111); **dadurch gekennzeichnet, dass** das System (100) ferner eine Checkout-Engine (124; 150) umfasst, die dazu dient:

ein mittleres erwartetes kumulatives Gewicht und eine Verteilung von dem mittleren erwarteten kumulativen Gewicht für zumindest einen Produktartikel, für den ein Kunde die Erlangung einer jeweiligen Gewichtsinformation initiiert hat, zu ermitteln (310); ein tatsächliches kumulatives Gewicht des auf die Einzelhandelskassenwaage gestellten Einkaufsbehältnisses eines Kunden zu ermitteln (320); und zu ermitteln, ob das tatsächliche kumulative Gewicht ein Checkout-Kriterium in Bezug auf die Verteilung von dem mittleren erwarteten kumulativen Gewicht erfüllt (330).

2. Einzelhandelskassensystem nach Anspruch 1, wobei die Checkout-Engine (124; 150) ferner dazu dient:

das Einkaufsverhalten eines Kunden zu überwachen, und basierend auf dem überwachten Einkaufsverhalten dem Kunden ein Einkaufsmuster zuzuordnen.

3. Einzelhandelskassensystem nach Anspruch 1 oder 2, wobei die Ermittlung eines mittleren erwarteten kumulativen Gewichts und einer Verteilung von dem mittleren erwarteten kumulativen Gewicht für zumindest einen Produktartikel, für den ein Kunde die Erlangung einer jeweiligen Gewichtsinformation initiiert hat, umfasst, dass:

basierend auf Beispielgewichten von Produktartikeln des gleichen Typs Parameter einer Xi-Verteilungsfunktion durch Einsetzen einer Monte-Carlo-Simulation geschätzt werden, und basierend auf den geschätzten Parametern der Xi-Verteilungsfunktion Parameter einer Normalverteilung von Gewichten für eine Population von Sätzen von Produktartikeln geschätzt werden.

4. Einzelhandelskassensystem nach Anspruch 3, wobei das Schätzen von Parametern einer Xi-Verteilung umfasst, dass eine Stichprobenvarianz von Gewichten für eine Population von Produktartikeln des gleichen Typs geschätzt wird.

5. Einzelhandelskassensystem nach Anspruch 3 oder 4, ferner umfassend, dass basierend auf den geschätzten Parametern der Xi-Verteilungsfunktion ein mittleres Gewicht und eine Standardabweichung für die Population von Produktartikeln geschätzt werden.

**6.** Einzelhandelskassensystem nach einem der Ansprüche 1 bis 5, wobei die Ermittlung des mittleren erwarteten kumulativen Gewichts ferner umfasst, dass für Produktartikel, für die keine Beispielgewichte verfügbar sind:

ein System von linearen Gleichungen erzeugt wird, wobei jede Gleichung für einen Kunden, der ausgecheckt hat, das tatsächliche kumulative Gewicht mit der Anzahl von durch den Kunden ausgewählten Produktartikeln multipliziert mit einem jeweiligen unbekannten Gewicht des ausgewählten Produktartikels beschreibt, und das System von linearen Gleichungen für die jeweiligen unbekannten Gewichte unter der Voraussetzung gelöst wird, dass solch ein System von linearen Gleichungen nicht unterbestimmt ist.

**7.** Einzelhandelskassensystem nach Anspruch 6, wobei das Lösen des Systems der linearen Gleichungen umfasst, dass eine Methode der kleinsten Quadrate eingesetzt wird.

**8.** Einzelhandelskassensystem nach einem der Ansprüche 1 bis 7, wobei die Checkout-Engine (124; 150) ferner dazu dient:
basierend auf den Nenngewichten, die den in das Einkaufsbehältnis geladenen Produktartikeln zugeordnet sind, das erwartete kumulative Gewicht des Einkaufsbehältnisses zu ermitteln.

**9.** Einzelhandelskassensystem nach einem der Ansprüche 1 bis 8, wobei die Ermittlung des mittleren erwarteten kumulativen Gewichts umfasst, dass eine Maximum-Likelihood-Schätzung angewandt wird, um einen Schätzwert eines mittleren Gewichts für einen Satz von Produktartikeln des gleichen Typs zu erhalten.

**10.** Einzelhandelskassensystem nach einem der Ansprüche 1 bis 9, wobei die Checkout-Engine (124; 150) eine Begleichung einer Bezahlung für Produktartikel, die durch den Kunden ausgewählt und in das Einkaufsbehältnis gelegt wurden, ermöglicht, ohne dass das Herausnehmen der Produktartikel aus dem Einkaufsbehältnis erforderlich ist.

**11.** Computerprogrammprodukt, um einer Vielzahl von Kunden zu ermöglichen, einen oder mehrere Produktartikel von zumindest einem Satz von Produktartikeln eines gegebenen Typs auszuchecken, der ein geschätztes mittleres Gewicht und eine Abweichung von dem geschätzten mittleren Gewicht, das dem Satz von Produktartikeln zugehörig ist, aufweist, wobei das Computerprogrammprodukt umfasst: ein nicht transitorisches konkretes Speichermedium, das durch einen Verarbeitungsschaltkreis gelesen werden kann und Anweisungen zur Ausführung durch den Verarbeitungsschaltkreis zum Durchführen eines Verfahrens speichert, das umfasst, dass:

ein mittleres erwartetes kumulatives Gewicht und eine Verteilung von dem mittleren erwarteten kumulativen Gewicht für zumindest einen Produktartikel, für den ein Kunde die Erlangung einer jeweiligen Gewichtsinformation initiiert hat, ermittelt werden (310);
ein tatsächliches kumulatives Gewicht des auf die Einzelhandelskassenwaage gestellten Einkaufsbehältnisses eines Kunden ermittelt wird (320); und
ermittelt wird, ob das tatsächliche kumulative Gewicht ein Checkout-Kriterium in Bezug auf die Verteilung von dem mittleren erwarteten kumulativen Gewicht erfüllt (330).

**12.** Computerprogrammprodukt nach Anspruch 11, das ferner dazu dient:

das Einkaufsverhalten eines Kunden zu überwachen, und basierend auf dem überwachten Einkaufsverhalten dem Kunden ein Einkaufsmuster zuzuordnen.

**13.** Computerprogrammprodukt nach Anspruch 11 oder 12, wobei die Ermittlung eines mittleren erwarteten kumulativen Gewichts und einer Verteilung von dem mittleren erwarteten kumulativen Gewicht für zumindest einen Produktartikel, für den ein Kunde die Erlangung einer jeweiligen Gewichtsinformation initiiert hat, umfasst:

Schätzen von Parametern einer Xi-Verteilungsfunktion durch Einsetzen einer Monte-Carlo-Simulation basierend auf Beispielgewichten von Produktartikeln des gleichen Typs, und
Schätzen von Parametern einer Normalverteilung von Gewichten für eine Population von Sätzen von Produktartikeln basierend auf den geschätzten Parametern der Xi-Verteilungsfunktion;
wobei das Schätzen von Parametern einer Xi-Verteilung insbesondere umfasst, dass eine Stichprobenvarianz von Gewichten für eine Population von Produktartikeln des gleichen Typs geschätzt wird.

14. Computerprogrammprodukt nach Anspruch 13, ferner umfassend, dass basierend auf der geschätzten Stichprobenvarianz von Gewichten einer Population von Produktartikeln ein mittleres Gewicht und eine Standardabweichung für die Population von Produktartikeln geschätzt werden.

15. Verfahren, um einer Vielzahl von Kunden zu ermöglichen, einen oder mehrere Produktartikel von zumindest einem Satz von Produktartikeln eines gegebenen Typs auszuchecken, der ein geschätztes mittleres Gewicht und eine Abweichung von dem geschätzten mittleren Gewicht, das dem Satz von Produktartikeln zugehörig ist, aufweist, umfassend, dass:

ein mittleres erwartetes kumulatives Gewicht und eine Verteilung von dem mittleren erwarteten kumulativen Gewicht für zumindest einen Produktartikel, für den ein Kunde die Erlangung einer jeweiligen Gewichtsinformation initiiert hat, ermittelt werden (310);
ein tatsächliches kumulatives Gewicht des auf die Einzelhandelskassenwaage gestellten Einkaufsbehältnisses eines Kunden ermittelt wird (320); und
ermittelt wird, ob das tatsächliche kumulative Gewicht ein Checkout-Kriterium in Bezug auf die Verteilung von dem mittleren erwarteten kumulativen Gewicht erfüllt (330).

16. Verfahren nach Anspruch 15, das ferner umfasst, dass:

das Einkaufsverhalten eines Kunden überwacht wird, und basierend auf dem überwachten Einkaufsverhalten dem Kunden ein Einkaufsmuster zugeordnet wird.

17. Verfahren nach Anspruch 15 oder 16, wobei die Ermittlung eines mittleren erwarteten kumulativen Gewichts und einer Verteilung von dem mittleren erwarteten kumulativen Gewicht für zumindest einen Produktartikel, für den ein Kunde die Erlangung einer jeweiligen Gewichtsinformation initiiert hat, umfasst, dass:

basierend auf Beispielgewichten von Produktartikeln des gleichen Typs Parameter einer Xi-Verteilungsfunktion durch Einsetzen einer Monte-Carlo-Simulation geschätzt werden; und
basierend auf den geschätzten Parametern der Xi-Verteilungsfunktion Parameter einer Normalverteilung von Gewichten für eine Population von Sätzen von Produktartikeln geschätzt werden;
wobei das Schätzen von Parametern einer Xi-Verteilung insbesondere umfasst, dass die Stichprobenvarianz von Gewichten für eine Population von Produktartikeln des gleichen Typs geschätzt wird, und/oder ferner umfassend, dass basierend auf den geschätzten Parametern der Xi-Verteilungsfunktion ein mittleres Gewicht und eine Standardabweichung für die Population von Produktartikeln geschätzt werden.

18. Verfahren nach einem der Ansprüche 15 bis 17, wobei der Schritt des Ermittelns des mittleren erwarteten kumulativen Gewichts ferner umfasst, dass für Produktartikel, für die keine Beispielgewichte verfügbar sind:

ein System von linearen Gleichungen erzeugt wird, wobei jede Gleichung für einen Kunden, der ausgecheckt hat, das tatsächliche kumulative Gewicht mit der Anzahl von durch den Kunden ausgewählten Produktartikeln multipliziert mit einem jeweiligen unbekannten Gewicht des ausgewählten Produktartikels beschreibt, und
das System von linearen Gleichungen für die jeweiligen unbekannten Gewichte unter der Voraussetzung gelöst wird, dass solch ein System von linearen Gleichungen nicht unterbestimmt ist, insbesondere wobei das Lösen des Systems der linearen Gleichungen umfasst, dass eine Methode der kleinsten Quadrate eingesetzt wird;

und/oder wobei die Ermittlung des erwarteten kumulativen Gewichts eines Einkaufsbehältnisses basierend auf den Nenngewichten, die den in das Einkaufsbehältnis geladenen Produktartikeln zugeordnet sind, erfolgt; und/oder wobei die Ermittlung des mittleren erwarteten kumulativen Gewichts umfasst, dass eine Maximum-Likelihood-Schätzung angewandt wird, um einen Schätzwert eines mittleren Gewichts für einen Satz von Produktartikeln des gleichen Typs zu erhalten.

19. Computerprogrammprodukt, das direkt in den internen Speicher eines Computers ladbar ist, umfassend Softwarecodeabschnitte zum Durchführen der Schritte nach einem der Ansprüche 15 bis 18, wenn das Produkt auf dem Computer ausgeführt wird.

20. Nicht transitorisches konkretes von einem Computer lesbares Speichermedium, das einen Satz von Anweisungen speichert, die durch zumindest einen Prozessor (122) eines Servers (120) ausführbar sind, um zu bewirken, dass der Server (120) ein Verfahren durchführt, um einer Vielzahl von Kunden zu ermöglichen, einen oder mehrere Produktartikel von zumindest einem Satz von Produktartikeln eines gegebenen Typs auszuchecken, der ein geschätztes mittleres Gewicht und eine Abweichung von dem geschätzten mittleren Gewicht, das dem Satz von Produktartikeln zugehörig ist, aufweist, wobei das Verfahren umfasst, dass:

ein mittleres erwartetes kumulatives Gewicht und eine Verteilung von dem mittleren erwarteten kumulativen Gewicht für zumindest einen Produktartikel, für den ein Kunde die Erlangung einer jeweiligen Gewichtsinformation initiiert hat, ermittelt werden (310);
ein tatsächliches kumulatives Gewicht des auf eine Einzelhandelskassenwaage gestellten Einkaufsbehältnisses eines Kunden ermittelt wird (320); und
ermittelt wird, ob das tatsächliche kumulative Gewicht ein Checkout-Kriterium in Bezug auf die Verteilung von dem mittleren erwarteten kumulativen Gewicht erfüllt (330).

21. Nicht transitorisches konkretes von einem Computer lesbares Speichermedium nach Anspruch 20, wobei das Verfahren ferner umfasst, dass:

das Einkaufsverhalten eines Kunden überwacht wird, und basierend auf dem überwachten Einkaufsverhalten dem Kunden ein Einkaufsmuster zugeordnet wird.

**Revendications**

1. Système de caisse de commerce de détail destiné à permettre à une pluralité de clients d'encaisser un ou plusieurs articles de produits d'au moins un groupe d'articles de produits d'un type donné qui a un poids moyen estimé et une déviation du poids moyen estimé associée au groupe d'articles de produits, le système (100) comprenant :

une balance (111) de caisse de commerce de détail ;
**caractérisé en ce que**
le système (100) comprend en outre un moteur de caisse (124 ; 150) qui est opérationnel pour :

déterminer un poids cumulé anticipé moyen et une distribution à partir du poids cumulé anticipé moyen pour au moins un article de produit pour lequel un client a initié l'acquisition d'information de poids respective (310) ;
déterminer un poids cumulé factuel d'un réceptacle d'achat d'un client placé sur la balance de caisse de commerce de détail (320) ; et
déterminer si le poids cumulé factuel correspond à un critère de caisse par rapport à la distribution à partir du poids cumulé anticipé moyen (330).

2. Système de caisse de commerce de détail selon la revendication 1, dans lequel le moteur de caisse (124 ; 150) est en outre opérationnel pour :

surveiller le comportement d'achat d'un client et, sur la base du comportement d'achat surveillé,
associer un motif d'achat au client.

3. Système de caisse de commerce de détail selon la revendication 1 ou 2, dans lequel la détermination d'un poids cumulé anticipé moyen et d'une distribution à partir du poids cumulé anticipé moyen pour au moins un article de produit pour lequel un client a initié l'acquisition d'information de poids respective, comprend :

d'estimer, sur la base de poids d'échantillons d'articles de produits du même type, des paramètres d'une fonction de distribution Xi en employant la simulation de Monte-Carlo, et
sur la base des paramètres estimés de la fonction de distribution Xi, d'estimer des paramètres d'une distribution normale de poids pour une population de groupes d'articles de produits.

4. Système de caisse de commerce de détail selon la revendication 3, dans lequel l'estimation de paramètres d'une distribution Xi comprend d'estimer une variance d'échantillons de poids pour une population d'articles de produits du même type.

5. Système de caisse de commerce de détail selon la revendication 3 ou 4, comprenant en outre, sur la base des paramètres estimés de la fonction de distribution Xi, d'estimer un poids moyen et une déviation standard pour la population d'articles de produits.

**6.** Système de caisse de commerce de détail selon l'une quelconque des revendications 1 à 5, dans lequel la détermination du poids cumulé anticipé moyen comprend en outre, pour des articles de produits pour lesquels aucun poids échantillonné n'est disponible :

de générer un système d'équations linéaires, dans lequel chaque équation décrit, pour un client qui a encaissé, le poids cumulé factuel avec le nombre d'articles de produits sélectionnés par le client multiplié par un poids inconnu respectif de l'article de produit sélectionné, et
de résoudre le système d'équations linéaires pour les poids inconnus respectifs, pour autant que ce système d'équations linéaires n'est pas sous-déterminé.

**7.** Système de caisse de commerce de détail selon la revendication 6, dans lequel la résolution du système des équations linéaires comprend d'employer une méthode d'ajustement des moindres carrés.

**8.** Système de caisse de commerce de détail selon l'une quelconque des revendications 1 à 7, dans lequel le moteur de caisse (124 ; 150) est en outre opérationnel pour :
déterminer, sur la base des poids nominaux assignés aux articles de produits chargés dans le réceptacle d'achat, le poids cumulé anticipé du réceptacle d'achat.

**9.** Système de caisse de commerce de détail selon l'une quelconque des revendications 1 à 8, dans lequel la détermination du poids cumulé anticipé moyen comprend d'appliquer une Estimation du Maximum de Vraisemblance pour obtenir une estimation d'un poids moyen pour un groupe d'articles de produits du même type.

**10.** Système de caisse de commerce de détail selon l'une quelconque des revendications 1 à 9, dans lequel le moteur de caisse (124 ; 150) autorise un paiement de règlement pour des articles de produits sélectionnés et placés par le client dans le réceptacle d'achat sans nécessiter l'enlèvement des articles de produits hors du réceptacle d'achat.

**11.** Produit de programme d'ordinateur destiné à permettre à une pluralité de client d'encaisser un ou plusieurs articles de produits d'au moins un groupe d'articles de produits d'un type donné qui a un poids moyen estimé et une déviation du poids moyen estimé associée au groupe d'articles de produits, le produit de programme d'ordinateur comprenant :
un support de stockage tangible non transitoire lisible par un circuit de traitement et stockant des instructions pour une exécution par le circuit de traitement destiné à exécuter un procédé comprenant les opérations consistant à :

déterminer un poids cumulé anticipé moyen et une distribution à partir du poids cumulé anticipé moyen pour au moins un article de produit pour lequel un client a initié l'acquisition d'information de poids respective (310) ;
déterminer un poids cumulé factuel d'un réceptacle d'achat d'un client placé sur la balance de caisse de commerce de détail (320) ; et
déterminer si le poids cumulé factuel correspond à un critère de caisse par rapport à la distribution à partir du poids cumulé anticipé moyen (330).

**12.** Produit de programme d'ordinateur selon la revendication 11, en outre opérationnel pour :

surveiller le comportement d'achat d'un client et, sur la base du comportement d'achat surveillé,
associer un motif d'achat au client.

**13.** Produit de programme d'ordinateur selon la revendication 11 ou 12, dans lequel la détermination d'un poids cumulé anticipé moyen et d'une distribution à partir du poids cumulé anticipé moyen pour au moins un article de produit pour lequel un client a initié l'acquisition d'information de poids respective, comprend :

d'estimer, sur la base de poids d'échantillons d'articles de produits du même type, des paramètres d'une fonction de distribution Xi en employant la simulation de Monte-Carlo, et
sur la base des paramètres estimés de la fonction de distribution Xi, d'estimer des paramètres d'une distribution normale de poids pour une population de groupes d'articles de produits ;
en particulier dans lequel l'estimation de paramètres d'une distribution Xi comprend d'estimer une variance d'échantillons de poids pour une population d'articles de produits du même type.

**14.** Produit de programme d'ordinateur selon la revendication 13, comprenant en outre, sur la base de la variance d'échantillons estimée de poids d'une population d'articles de produits, d'estimer un poids moyen et une déviation standard pour la population d'articles de produits.

**15.** Procédé pour permettre à une pluralité de clients d'encaisser un ou plusieurs articles de produits d'au moins un groupe d'articles de produits d'un type donné qui a un poids moyen estimé et une déviation du poids moyen estimé associée au groupe d'articles de produits, comprenant les étapes consistant à :

déterminer un poids cumulé anticipé moyen et une distribution à partir du poids cumulé anticipé moyen pour au moins un article de produit pour lequel un client a initié l'acquisition d'information de poids respective (310) ;
déterminer un poids cumulé factuel d'un réceptacle d'achat d'un client placé sur la balance de caisse de commerce de détail (320) ; et
déterminer si le poids cumulé factuel correspond à un critère de caisse par rapport à la distribution à partir du poids cumulé anticipé moyen (330).

**16.** Procédé selon la revendication 15, comprenant en outre les étapes consistant à :

surveiller le comportement d'achat d'un client et, sur la base du comportement d'achat surveillé,
associer un motif d'achat au client.

**17.** Procédé selon la revendication 15 ou 16, dans lequel la détermination d'un poids cumulé anticipé moyen et d'une distribution à partir du poids cumulé anticipé moyen pour au moins un article de produit pour lequel un client a initié l'acquisition d'information de poids respective, comprend :

d'estimer, sur la base de poids d'échantillons d'articles de produits du même type, des paramètres d'une fonction de distribution Xi en employant la simulation de Monte-Carlo ; et
sur la base des paramètres estimés de la fonction de distribution Xi, d'estimer des paramètres d'une distribution normale de poids pour une population de groupes d'articles de produits ;
en particulier dans lequel l'estimation de paramètres d'une distribution Xi comprend d'estimer la variance d'échantillons de poids pour une population d'articles de produits du même type et/ou comprend en outre, sur la base des paramètres estimés de la fonction de distribution Xi, d'estimer un poids moyen et une déviation standard pour la population d'articles de produits.

**18.** Procédé selon l'une quelconque des revendications 15 à 17, dans lequel l'étape consistant à déterminer le poids cumulé anticipé moyen comprend, pour des articles de produits pour lesquels aucun poids échantillonné n'est disponible :

de générer un système d'équations linéaires, dans lequel chaque équation décrit, pour un client qui a encaissé, le poids cumulé factuel avec le nombre d'articles de produits sélectionnés par le client multiplié par un poids inconnu respectif de l'article de produit sélectionné, et
de résoudre le système d'équations linéaires pour les poids inconnus respectifs, pour autant que ledit système d'équations linéaires n'est pas sous-déterminé, en particulier
dans lequel la résolution du système des équations linéaires comprend d'employer une méthode d'ajustement des moindres carrés ;
et/ou dans lequel la détermination du poids cumulé anticipé d'un réceptacle d'achat est basée sur les poids nominaux assignés aux articles de produits chargés dans le réceptacle d'achat ;
et/ou dans lequel la détermination du poids cumulé anticipé moyen comprend d'appliquer une Estimation du Maximum de Vraisemblance pour obtenir une estimation d'un poids moyen pour un groupe d'articles de produits du même type.

**19.** Produit de programme d'ordinateur chargeable directement dans la mémoire interne d'un ordinateur, comprenant des portions de code de logiciel pour mettre en oeuvre les étapes selon l'une quelconque des revendications 15 à 18 quand le produit fonctionne sur ordinateur.

**20.** Support de stockage tangible non transitoire lisible sur ordinateur stockant un groupe d'instructions qui sont exécutables par au moins un processeur (122) d'un serveur (120) pour amener le serveur (120) à mettre en oeuvre un procédé permettant à une pluralité de clients d'encaisser un ou plusieurs articles de produits d'au moins un groupe d'articles de produits d'un type donné qui a un poids moyen estimé et une déviation du poids moyen estimé associée au groupe d'articles de produits, le procédé comprenant les étapes consistant à

déterminer un poids cumulé anticipé moyen et une distribution à partir du poids cumulé anticipé moyen pour au moins un article de produit pour lequel un client a initié l'acquisition d'information de poids respective (310) ; déterminer un poids cumulé factuel d'un réceptacle d'achat d'un client placé sur la balance de caisse de commerce de détail (320) ; et déterminer si le poids cumulé factuel correspond à un critère de caisse par rapport à la distribution à partir du poids cumulé anticipé moyen (330).

21. Support de stockage tangible non transitoire lisible sur ordinateur selon la revendication 20, dans lequel le procédé comprend en outre les étapes consistant à :

surveiller le comportement d'achat d'un client et, sur la base du comportement d'achat surveillé, associer un motif d'achat au client.

FIG. 1A

FIG. 1B

**Retail Checkout (RC) Terminal**

RC Terminal Weight Scale

RC Terminal Processor

RC Terminal Memory

RC Terminal Checkout Engine

RC Terminal Communication Module

RC Terminal User Interface

RC Terminal Power Module

**Retail Checkout (RC) Server**

RC Server Database

RC Server Processor

RC Server Memory

RC Server Checkout Engine

RC Server Communication Module

RC Server User Interface

RC Server Power Module

**Product Item Reader Device**

Reader device module

Reader device processor

Reader device memory

Reader device checkout engine

Reader device communication module

Reader device user interface

Reader device power module

FIG. 2

310 — DETERMINE A MEAN ANTICIPATED CUMULATIVE WEIGHT AND DISTRIBUTION FROM AN ANTICIPATED CUMULATIVE WEIGHT FOR AT LEAST ONE PRODUCT ITEM FOR WHICH A CUSTOMER INITIATED THE ACQUISITION OF RESPECTIVE WEIGHT INFORMATION

320 — DETERMINE A FACTUAL CUMULATIVE WEIGHT OF THE CUSTOMER'S SHOPPING RECEPTACLE PLACED ON THE RETAIL CHECKOUT WEIGHT SCALE OF THE RETAIL CHECKOUT SYSTEM

330 — DETERMINE WHETHER THE FACTUAL CUMULATIVE WEIGHT MEETS A CHECKOUT CRITERION WITH RESPECT TO THE DISTRIBUTION FROM THE MEAN OF THE ANTICIPATED CUMULATIVE WEIGHT

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1933119 A2
- EP 1933267 A2

- US 20120055982 A1